# EUROPEAN PATENT APPLICATION

(11) **EP 3 767 710 A1**
(43) Date of publication of application: **20.01.2021**
(21) Application number: 19315071.1
(22) Date of filing: 15.07.2019
(51) Int. Cl.: H01M 4/134, H01M 4/1395, H01M 4/62, H01M 10/0525, H01M 4/38, H01M 4/587

(54) **WATERBASED PVDF SLURRY FORMULATION FOR SILICON GRAPHITE ANODES**

(71) Applicant: ARKEMA FRANCE, 92700 Colombes (FR)
(72) Inventor: FUKUYAMA, Takehiro, Tokyo (JP); HE, Wensheng, King OF Prussia, PA 19406 (US); FINE, Thomas, 92705 Colombes Cedex (FR); BONNET, Anthony, 92705 Colombes Cedex (FR)
(74) Representative: Arkema Patent

(57) **Abstract**

The invention relates to a silicon graphite anode comprising an aqueous binder, to its method of preparation and to its use in a Li-ion battery. Another subject matter of the invention is the Li-ion batteries manufactured by incorporating this electrode material.

## Description

### FIELD OF THE INVENTION

The present invention relates generally to the field of electrical energy storage in the lithium storage batteries of Li-ion type. More specifically, the invention relates to a silicon graphite anode comprising an aqueous binder, to its method of preparation and to its use in a Li-ion battery. Another subject matter of the invention is the Li-ion batteries manufactured by incorporating this electrode material.

### TECHNICAL BACKGROUND

An elementary cell of a Li-ion storage battery or lithium battery comprises an anode (at discharge), and a cathode (likewise at discharge) generally made of a lithium insertion compound of metal oxide type, such as LiMn₂O₄, LiCoO₂ or LiNiO₂, between which is inserted an electrolyte which conducts lithium ions.

The conventional active materials at the negative electrode are generally lithium metal, graphite, silicon/carbon composites, silicon, fluorographites of CFₓ type with x between 0 and 1, and titanates of LiTi₅O₁₂ type. Carbon-based anode materials such as graphite and hard carbon have proved to have stable cycling properties and to be reliable, but have not shown high capacity. Anode materials from the carbon group of the Periodic table, such as tin (Sn), germanium (Ge) and silicon (Si) show higher capacities. Silicon (Si), in particular, is a very promising anode material due to its high theoretical capacity of 4200mAh/g, much higher than the theoretical maximum capacity of graphite (372 mAh/g). However, silicon anodes suffer from large changes in volume during charge-discharge processes, and these volume changes cause losses in electrical contact between silicon particles and conducting agents, and hence rapid capacity loss. Silicon-graphite battery electrodes circumvent these issues. The graphite phase plays an important role in the improving of the cycling performance of the material, as shown by Dimov N. et al, J. Power Sources 136 (2004), 108-114.

The choice of the binder allows addressing the problems associated with the volume expansion of Si. Poly(vinylidene fluoride) (PVDF) is the most commonly used binder in lithium-ion batteries because of its excellent electrochemical stability, good bonding capability and high adhesion to electrode materials and current collectors. However, PVDF can only be dissolved in certain organic solvents such as N-Methyl pyrrolidone (NMP), which is volatile, flammable, explosive, and highly toxic, leading to serious environment concern. Therefore, carboxyl group- or hydroxyl group-containing polymers such as poly(vinylacrylate), poly(vinyl alcohol), and carboxymethyl cellulose (CMC) have been also widely investigated as polymer binders, due to their ability to be dissolved in water, and the enhanced cell performance apparently resulting from relatively strong interactions between their carboxyl or hydroxyl groups and the hydroxyl groups on the silicon surface. However, conductive additives must still be included together with a relatively large amount of these non-conductive binders, causing significant reductions in absolute anode capacity.

With the aim of improving silicon anodes' performances, the document WO2014/201569 describes an anode for lithium battery, comprising an anode material, a protective material and a current collector. The anode material can be a mixture comprising a silicon-graphite active material, at least one electronically conductive agent and a binder. The protective material comprises at least one electronically conductive agent and a binder. The binder in the anode material and the binder in the protective material are independently selected from: PVDF, a copolymer of vinylidene fluoride and hexafluoropropene, a polyimide, natural or synthetic rubber, CMC, an alginate in acid form or salt form, and a mixture thereof. Both the anode and protective materials are prepared by a process involving the step of forming a protective film by mixing in a solvent the material and the binder. Selection of this solvent depends on the binder. When the binder is natural or synthetic rubber, a carboxymethyl cellulose (CMC) or an alginate, the solvent is water. N-methylpyrrolidone (NMP) or cyclopentanone are used when the binder is PVDF or a polyimide.

Thus, there still exists a need to develop a binder formulation for silicon graphite anodes that presents a good maximum capacity and capacity retention, without the use of organic solvents such as NPM, and by means of a simplified manufacturing process, that no longer needs a protective layer for the anode as in the above-cited document. It has now been found that anode formulations comprising a binder made of water-based PVDF and CMC, show higher capacity and capacity retention compared to anode formulations comprising a styrene-butadiene rubber (SBR) binder, which are also water based and commonly used in market.

### SUMMARY OF THE INVENTION

It is a first object of the invention to provide an aqueous binder formulation for silicon graphite anode for a Li-ion cell, consisting of:
a. 50-100 weight % of one or more thermoplastic fluoropolymer, wherein said fluoropolymer is in latex form, and
b. 0-50 weight % of a water soluble thickener.

In some embodiments, said fluoropolymer is chosen from: homopolymers and copolymers of vinylidene fluoride preferably containing at least 50% by weight of VDF, the comonomer being chosen from chlorotrifluoroethylene, hexafluoropropylene, trifluoroethylene and tetrafluoroethylene, and is preferably a polyvinylidene fluoride (PVDF) homopolymer or a copolymer of vinylidene fluoride with hexafluoropropylene.

In some embodiments, said water-soluble thickener is carboxymethyl cellulose.

In some embodiments, said aqueous binder formulation consists of 50 to 95 weight % of one or more thermoplastic fluoropolymer, and of 5-50 weight % of a water soluble thickener.

In some embodiments, said fluoropolymer comprises monomers with at least one functionality chosen from carboxyl, epoxy, carbonyl or hydroxyl, from about 0.01 to about 1.5 weight percent based on total monomer.

Another subject matter of the invention is a silicon graphite anode for lithium-ion battery consisting of at least one anode active material, the above-described aqueous binder formulation, and a carbon based conductive agent. The proportions of each component in the silicon graphite anode are: active material from70 to 99 weight %, binder formulation from 1 to 15 wt%, and conductive agent from 0 to 15 wt%, the sum of these percentages adding up to 100.

Another subject matter of the invention is a method for forming the silicon graphite anode of the invention.

Another subject matter of the invention is a Li-ion battery manufactured by incorporating this electrode material.

The present invention addresses the need expressed in the prior art. In particular, the invention provides an aqueous binder formulation for silicon anode purely water-based, which is beneficial for environmental and handling reasons. The aqueous binder formulation is based on the combination of a PVDF latex and a water-soluble thickener; anodes prepared from this formulation show cycle performances higher than anodes having a SBR binder, which is also purely water-based.

### BRIEF DESCRIPTION OF THE DRAWINGS

FIG. 1 illustrates the results of peeling strength measurements performed on two cells according to the invention (A and B), and on a comparative cell (C).
FIG. 2 illustrates the cycle performances of the half coin cells fabricated from each electrodes.

### DETAILED DESCRIPTION OF THE INVENTION

The invention will now be described in more detail in the following description.

The invention relates first to an aqueous binder formulation for silicon graphite anode for a Li-ion cell, consisting of:
a. 50-100 weight % of one or more thermoplastic fluoropolymer, wherein said fluoropolymer is in latex form, and
b. 0-50 weight % of a water soluble thickener.

The invention relies on the use of at least one thermoplastic fluoropolymer, preferably PVDF, in latex form, and a water-soluble thickener, preferably carboxy methyl cellulose, as the binder for lithium ion battery anodes containing silicon. Advantageously, the fluoropolymer is supplied as emulsion in water.

The term "fluoropolymer" means a polymer formed by the polymerization of at least one fluoromonomer, and it is inclusive of homopolymers, copolymers, terpolymers and higher polymers which are thermoplastic in their nature, meaning they are capable of being formed into useful pieces by flowing upon the application of heat, such as is done in molding and extrusion processes. The fluoropolymer in certain embodiments of the invention contains at least 50 mole percent of one or more fluoromonomers, in polymerized form.

Fluoromonomers useful in the practice of the invention include, for example, vinylidene fluoride (VDF or VF2), tetrafluoroethylene (TFE), trifluoroethylene, chlorotrifluoroethylene (CTFE), hexafluoropropene (HFP), vinyl fluoride, hexafluoroisobutylene, perfluorobutylethylene (PFBE), pentafluoropropene, 3,3,3-trifluoro-1-propene, 2,3,3,3-tetrafluoropropene, fluorinated vinyl ethers, fluorinated allyl ethers, fluorinated dioxoles, and combinations thereof.

Especially preferred copolymers made by the process of the invention are copolymers of VDF with HFP, TFE or CTFE, comprising from about 50 to about 99 weight percent VDF, more preferably from about 70 to about 99 weight percent VDF.

The term "PVDF" employed here comprises vinylidene fluoride (VDF) homopolymers or copolymers of VDF and of at least one other comonomer in which the VDF represents at least 50 % by weight.

In some embodiments, the fluoropolymer is chosen from: homopolymers and copolymers of vinylidene fluoride preferably containing at least 50% by weight of VDF, the comonomer being chosen from chlorotrifluoroethylene, hexafluoropropylene, trifluoroethylene and tetrafluoroethylene.

Preferably, the fluoropolymer is polyvinylidene fluoride (PVDF) homopolymer or a copolymer of vinylidene fluoride with hexafluoropropylene in which the level of HFP is less or equal to 30% by weight.

The fluoropolymer is primarily produced via heterogeneous polymerization reactions, including suspension, emulsion and microemulsion systems. Generally, each of these reactions requires at least one monomer and a radical initiator in a suitable reaction medium. In addition, emulsion polymerizations of halogen-containing monomers generally require a surfactant capable of emulsifying both the reactants and the reaction products for the duration of the polymerization reaction.

In some variants, a process similar to that disclosed in document US 8,697,822 may be used. In short, a polymerization reaction is carried out by charging a reactor with water (preferably deionized water), at least one non-fluorinated surfactant, at least one monomer, preferably at least one fluoromonomer, and optionally, a chain-transfer agent and an antifoulant. Air may be purged from the reactor prior to the introduction of the fluoromonomer. Water is added to the reactor before bringing the reactor to the desired starting temperature, but the other materials may be added before or after bringing the reactor to temperature. At least one radical initiator is added to start and maintain the polymerization reaction. Additional monomer may be optionally added to replenish monomer that is consumed, and the other materials may be optionally added during the course of the polymerization to maintain the reaction and control the final product properties.

Upon completion of the polymerization reaction, the reactor is brought to ambient temperature and the residual unreacted monomer is vented to atmospheric pressure. The aqueous reaction medium containing the fluoropolymer is then recovered from the reactor as a latex. The latex consists of a stable mixture of the reaction components, i.e., water, surfactant, initiator (and/or decomposition products of the initiator) and fluoropolymer solids. The latex may contain from about 10 to about 50 weight percent polymer solids, preferably from 20 to 40% by weight. The polymer in the latex is in the form of small particles having a size range of from about 30 nm to about 500 nm.

In some embodiments, the fluoropolymer comprises monomers with at least one functionality chosen from carboxyl, epoxy, carbonyl or hydroxyl. Examples of monomers able to introduce carboxyl functionalities are unsaturated monobasic acid or unsaturated dibasic acid monomers in free acid, salt form, or anhydride form, selected from the group consisting of sulfonic acid groups, phosphonic acid groups and carboxylic acid groups and salts or anhydrides thereof. Such monomers are acrylic acid, methacrylic acid, vinyl sulfonic acid, vinyl phosphonic acid, itaconic acid, maleic acid, and salts of such compounds. Examples of monomers able to introduce epoxy functionalities are allyl glycidyl ether, methallyl glycidyl ether, crotonic acid glycidyl ether, and acetic acid glycidyl ether. Examples of monomers able to introduce carbonyl functionalities are ethylene carbonate. Examples of monomers able to introduce hydroxyl functionalities are hydroxyl ethyl acrylate and hydroxyl propyl acrylate. The functionalized monomers may be used in an amount, for example, of from about 0.01 to about 1.5 weight percent based on total monomer. Preferably, they are used in an amount from about 0.01 to about 0.5 weight percent based on total monomer.

In some variants, a process similar to that disclosed in document WO 2012/030784 may be used to prepare the functionalized fluoropolymers used in the present invention.

The water-soluble thickener included in the aqueous binder formulation for silicon graphite anode is selected from: carboxymethyl cellulose, methyl cellulose, polyacrylic acid, and polyvinyl pyrrolidone. Preferably, the water-soluble thickener is a carboxymethyl cellulose.

In one embodiment, the aqueous binder formulation consists in a PVDF homopolymer in latex form and carboxymethyl cellulose.

In one embodiment, the aqueous binder formulation consists in a copolymer of vinylidene fluoride with hexafluoropropylene and carboxymethyl cellulose, the level of hexafluoropropylene in the copolymer being inferior or equal to 30% by weight.

In one embodiment, the aqueous binder formulation consists in a copolymer of vinylidene fluoride with hexafluoropropylene and carboxymethyl cellulose, said copolymer being acid-functionalized.

In one embodiment, the aqueous binder formulation consists in a PVDF homopolymer, a copolymer of vinylidene fluoride with hexafluoropropylene and carboxymethyl cellulose, the level of hexafluoropropylene in the copolymer being inferior or equal to 30% by weight.

Another subject matter of the invention is a silicon graphite anode for lithium-ion battery consisting of at least one anode active material, the above-described aqueous binder formulation, and a carbon based conductive agent. The proportions of each component in the silicon graphite anode are: active material from70 to 99 weight %, binder formulation from 1 to 15 wt%, and conductive agent from 0 to 15 wt%, the sum of these percentages adding up to 100.

The anode active material is a Si graphite composite. The Si may be present as Si, an alloy or intermetallic compound of Si, or an oxide, carbide, nitride, sulfide, phosphide, selenide, telluride, antimonide, or their mixtures.

The conductive additive may be carbon black, carbon fibers, carbon nanotubes graphene particles, graphites, fullerenes, or their mixtures.

Another subject matter of the invention is a method for forming the silicon graphite anode of the invention. This method comprises the steps of:
- forming a slurry by mixing one or more thermoplastic fluoropolymer in latex form, a water soluble thickener, anode active material and conductive agent in water. The proportions of each component in the silicon graphite anode are: active material from70 to 99 weight %, binder formulation from 1 to 15 wt%, and conductive agent from 0 to 15 wt%, the sum of these percentages adding up to 100.
- applying the slurry to the surface of a metal current collector, then subject it to a heat treatment and pressure in order to obtain an anode.

In this method, the fluorinated polymer and the water-soluble thickener may have any optional or preferred feature described above in relation with the aqueous binder formulation for silicon graphite anode.

The metal current collector is made of copper.

The heat treatment consists in baking the metal collector coated with the slurry at a temperature comprised between 60 and 150°C for a duration comprised between 15 to 60 minutes.

The method for forming the silicon graphite anode of the invention is simplified compared to the prior art, since it no longer needs to manufacture a protective layer for the anode.

Another subject matter of the invention is a Li-ion battery manufactured by incorporating this electrode material. The performances of this battery are improved compared to those having anodes with a SBR binder.

### EXAMPLES

### Example A, B according to the invention and comparative example C

The components of the silicon graphite anodes are given in table 1. Each slurry is prepared by adding the two anode active materials: graphite (158-C) and silicon KSC-1064), conductive agent carbon black (Li-100), an aqueous binder, and caroxymethyl cellulose as thickener (BSH-6) in water and dispersing it with Filmix® 40-L type (Primix).

Each slurry was cast on copper foil at 8 mils wet thickness and baked at 120°C for 30 min, then pressed at 3 kN force to obtain anodes. The peeling strengths of the anodes were evaluated by 180 deg. peeling under JIS K6854 standard.

The anodes were used to form a coin cell respectively with Li metal as cathode. The electrolyte is Ethylene carbonate/Ethyl Methyl Carbonate = 3/7 with 1.2 M LiPF6 concentration with vinylene carbonate 2 % concentration. Polyolefin separator was placed in between the anode and cathode to form the coin cell. Each coin cell was submitted to successive charge/discharge cycles at 0.2C for 60 cycles at voltage range of 0.01∼1.5 V.

**Table 1**

| Wt% | Example A | Example B | Comparative Example C |
|---|---|---|---|
| 158-C(Graphite, BTR) | 46.9 | 46.9 | 46.9 |
| KSC1064 (Silicon, Shin-Etsu Chemical) | 5.2 | 5.2 | 5.2 |
| Li-100(Carbon black, Denka) | 0.3 | 0.3 | 0.3 |
| VDF-HFP copolymer latex | 2.3 | | |
| VDF-HFP copolymer with acid functionality latex | | 2.6 | |
| SBR latex (BM-400B, Zeon) | | | 1.9 |
| BSH-6 (CMC, DKS) | 0.8 | 0.8 | 0.8 |
| Water | 44.5 | 44.2 | 44.9 |

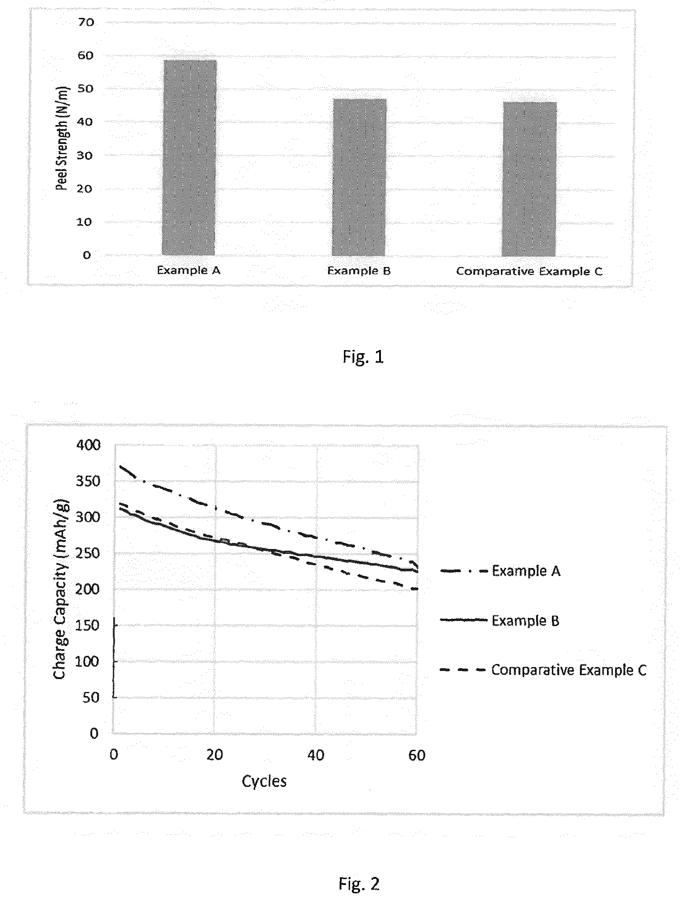

Fig. 1 shows the results of peeling strength measurements.

Fig. 2 shows the cycle performances of the half coin cells fabricated from each electrodes.

Examples A and B show higher capacity than the comparative example C after 60 cycles of charge and discharge.

### Method to produce P(VDF-HFP) copolymer latex for example A

Into an 80-gallon stainless steel reactor was charged, 345 lbs of deionized water, 90 g of non-ionic surfactant and 0.2 lbs of potassium acetate. Following evacuation, agitation was begun at 23 rpm, the reactor was heated. After reactor temperature reached the desired set point of 100.degree. C., the VDF and HFP monomer were introduced to reactor with HFP ratio of 62 wt % of total monomers. Reactor pressure was then raised to 650 psi by charging approximately 35 lbs total monomers into the reactor. After reactor pressure was stabilized, 1.0 lbs of initiator solution made of 1.0 wt % potassium persulfate and 1.0 wt % sodium acetate were added to the reactor to initiate polymerization. Upon initiation, the ratio of HFP to VDF was so adjusted to arrive at 33% HFP to total monomers in the feed. The rate of further addition of the initiator solution was also adjusted to obtain and maintain a final combined VDF and HFP polymerization rate of roughly 100 pounds per hour. The VDF and HPF copolymerization was continued until approximately 160 pounds monomers were introduced in the reaction mass. The HFP feed was stopped but VDF feed continued till approximately 180 lbs of total monomers were fed to the reactor. The VDF feed was stopped and the batch was allowed to react-out at the reaction temperature to consume residual monomer at decreasing pressure. After 40 minutes, the initiator feed and agitation were stopped and the reactor was cooled, vented and the latex recovered. Solids in the recovered latex were determined by gravimetric technique and were about 32 weight % and melt viscosity of about 38 kp according to ASTM method D-3835 measured at 450° F and 100 sec.sup.-1. The melting temperature of resin was measured in accordance with ASTMD3418 and was found to be not detectable during the second heat and there was no detectable heat of fusion. The weight average particle size was measured by NICOMP laser light scattering instrument and was found to be about 220 nm.

### Method to produce P(VDF-HFP) copolymer with acid functionality latex for example B

Into an 80-gallon stainless steel reactor was charged, 365 lbs of deionized water, 77 grams of non-ionic surfactant and 0.2 lbs of potassium acetate. Following evacuation, agitation was begun at 21 rpm, the reactor was heated. After reactor temperature reached the desired set point of 100° C., the VDF and HFP monomer were introduced to reactor with HFP ratio of 13.8 wt % of total monomers. Reactor pressure was then raised to 650 psi by charging approximately 35 lbs total monomers into the reactor. After reactor pressure was stabilized, 1.75 lbs of initiator solution made of 1.0 wt % potassium persulfate and 5.0 wt % PAA cp 10s were added to the reactor to initiate polymerization. Upon initiation, the ratio of HFP to VDF was so adjusted to arrive at 6% HFP to total monomers in the feed. The rate of further addition of the initiator solution was also adjusted to obtain and maintain a final combined VDF and HFP polymerization rate of roughly 100 pounds per hour. The VDF and HPF copolymerization was continued until approximately 160 pounds monomers were introduced in the reaction mass. The HFP feed was stopped but VDF feed continued till approximately 180 lbs of total monomers were fed to the reactor. The VDF feed was stopped and the batch was allowed to react-out at the reaction temperature to consume residual monomer at decreasing pressure. After 30 minutes, the initiator feed and agitation were stopped and the reactor was cooled, vented and the latex recovered. Solids in the recovered latex were determined by gravimetric technique and were about 32 weight % and melt viscosity of about 74 kp according to ASTM method D-3835 measured at 450° F. and 100 sec.sup.-1. The melting temperature of resin was measured in accordance with ASTMD3418 and was found to be about 147.5°C during the second heat. The weight average particle size was measured by NICOMP laser light scattering instrument and was found to be about 260 nm.

## Claims

1. An aqueous binder formulation for silicon graphite anode for a Li-ion cell, consisting of:
a. 50-100 weight % of one or more thermoplastic fluoropolymer, wherein said fluoropolymer is in latex form, and
b. 0-50 weight % of a water soluble thickener.

2. The aqueous binder formulation according to claim 1 wherein said fluoropolymer is chosen from: homopolymers and copolymers of vinylidene fluoride containing at least 50% by weight of VDF, the comonomer being chosen from chlorotrifluoroethylene, hexafluoropropylene, trifluoroethylene and tetrafluoroethylene.

3. The aqueous binder formulation according to one of claims 1 or 2 wherein the fluoropolymer is polyvinylidene fluoride (PVDF) homopolymer or a copolymer of vinylidene fluoride with hexafluoropropylene.

4. The aqueous binder formulation according to one of claims 1 to 3 wherein said water-soluble thickener is carboxymethyl cellulose.

5. The aqueous binder formulation according to one of claims 1 to 4 consisting in a PVDF homopolymer and carboxymethyl cellulose.

6. The aqueous binder formulation according to one of claims 1 to 4 consisting in a copolymer of vinylidene fluoride with hexafluoropropylene and carboxymethyl cellulose, the level of hexafluoropropylene in the copolymer being inferior or equal to 30% by weight.

7. The aqueous binder formulation according to one of claims 1 to 4 consisting in a copolymer of vinylidene fluoride with hexafluoropropylene and carboxymethyl cellulose, said copolymer comprising of monomers with at least one functionality chosen from carboxyl in salt or anhydride form, epoxy, carbonyl, or hydroxyl at 0.01 to 1.5 weight % of the functionality containing monomers.

8. The aqueous binder formulation according to one of claims 1 to 4 consisting in a PVDF homopolymer, a copolymer of vinylidene fluoride with hexafluoropropylene and carboxymethyl cellulose, the level of hexafluoropropylene in the copolymer being inferior or equal to 30% by weight.

9. The aqueous binder formulation according to one of the preceding claims wherein said fluoropolymer comprises carboxyl-functionalized monomers from 0.01 to 0.5 weight percent based on total monomer.

10. A silicon graphite anode for lithium-ion battery consisting of at least one anode active material, the aqueous binder formulation according to any of the preceding claims, and a carbon based conductive agent.

11. A method for forming the silicon graphite anode of claim 10, the method comprising the steps of:
- forming a slurry by mixing one or more thermoplastic fluoropolymer in latex form, a water soluble thickener, anode active material and conductive agent in water;
- applying the slurry to the surface of a metal current collector, then subject it to a heat treatment and pressure in order to obtain an anode.

12. The method according to claim 11 wherein the metal current collector is made of copper.

13. The method according to any of claims 11 or 12 wherein the heat treatment consists in baking the metal collector coated with the slurry at a temperature comprised between 60 and 150°C for a duration comprised between 15 to 60 minutes.

14. A lithium-ion battery comprising the silicon graphite anode of claim 10.
